# EUROPÄISCHE PATENTANMELDUNG

(11) **EP 3 716 429 A1**
(43) Veröffentlichungstag der Anmeldung: **30.09.2020**
(21) Anmeldenummer: 19165550.5
(22) Anmeldetag: 27.03.2019
(51) Int. Cl.: H02G 11/02, B65H 75/44, B65H 75/42, B60L 53/18, B60L 53/30, H02G 11/00, B66D 1/36

(54) **VORRICHTUNG ZUR FÜHRUNG EINES LADEKABELS**

(71) Anmelder: Ads-tec Energy GmbH, 72622 Nürtingen (DE)
(72) Erfinder: Speidel, Thomas, 71706 Markgröningen (DE)
(74) Vertreter: Wasmuth, Rolf

(57) **Zusammenfassung**

Die Erfindung betrifft eine Vorrichtung zur Führung eines Ladekabels (2), insbesondere eines Ladekabels (2) an einer Ladesäule (30) für einen elektrischen Verbraucher wie einem Kraftfahrzeug, wobei das Ladekabel (2) an einem ersten Ende (7) ortsfest angebunden ist und an einem zweiten, mobilen Ende (8) einen Ladestecker (9) aufweist. Um bei geringem Bauraum eine große Auszuglänge des Ladekabels bereitzustellen, ist vorgesehen, zwischen dem ersten Ende (7) und dem zweiten Ende (8) des Ladekabels (2) einen Führungswagen (4) anzuordnen. Das Ladekabel (2) ist in seiner Längsrichtung an dem Führungswagen (4) geführt und gehalten, wobei der Führungswagen (4) längs einer Führungsbahn (5) derart zu verfahren ist, dass sich der Abstand (a) des Führungswagens (4) zum ortsfesten Ende (7) des Ladekabels (2) ändert.

## Beschreibung

Die Erfindung betrifft eine Vorrichtung zur Führung eines Ladekabels, insbesondere eines Ladekabels an einer Ladesäule für einen elektrischen Verbraucher. Das Ladekabel ist an einem ersten Ende ortsfest angebunden und weist an einem zweiten, mobilen Ende einen Ladestecker auf.

Vorrichtungen zur Führung eines Ladekabels sind bei Ladesäulen für Elektrofahrzeuge in unterschiedlichen Ausgestaltungen bekannt. Das Ladekabel der Ladesäule dient zur Verbindung mit einem elektrischen Verbraucher, insbesondere einem Kraftfahrzeug, wobei das Ladekabel zur Überbrückung des Abstandes der Ladesteckdose des Kraftfahrzeugs zur Ladesäule aus der Ladesäule ausziehbar ist.

Bekannte Vorrichtungen zur ausziehbaren Halterung eines Ladekabels an einer Ladesäule benötigen viel Bauraum, da das ausziehbare Ladekabel bei Nichtbenutzung in einem Speicherraum abgelegt werden muss.

Der Erfindung liegt die Aufgabe zugrunde, eine Vorrichtung zur Führung eines ausziehbaren Ladekabels vorzusehen, die bei geringem Bauraum eine große Auszugslänge des Ladekabels zur Verbindung mit einem Verbraucher bereitstellt.

Bei einem Ladekabel, das an einem ersten Ende ortsfest angebunden ist und an einem zweiten Ende einen Ladestecker aufweist, ist zur Lösung der Aufgabe vorgesehen, dass zwischen dem ersten und dem zweiten Ende des Ladekabels ein Führungswagen angeordnet ist. Der Führungswagen führt das Ladekabel in seiner Längsrichtung und hält dieses am Führungswagen lagefixiert. Der Führungswagen ist längs einer Führungsbahn derart zu verfahren, dass sich der Abstand des Führungswagens zum ortsfesten Ende des Ladekabels ändert.

Wird der Führungswagen in Richtung auf das ortsfeste Ende des Ladekabels verfahren, so nimmt der Abstand des Führungswagens zum ortsfesten Ende des Ladekabels ab. Dadurch kann die Strecke des Ladekabels, die aufgrund des Verfahrens des Führungswagens in Richtung auf das ortsfeste Ende des Ladekabels frei wird, aus der Vorrichtung ausgezogen werden. Wird der Führungswagen in Gegenrichtung verfahren, wird das Ladekabel wieder in die Vorrichtung eingezogen.

Der Bauraum der erfindungsgemäßen Vorrichtung ist klein, da der Führungswagen im Wesentlichen in der Ebene des Ladekabels verfahren wird. Bei einer Fahrbewegung in Richtung auf das ortsfeste Ende des Ladekabels wird dieses zum Auszug freigegeben. Vergrößert der Führungswagen seinen Abstand zum ortsfesten Ende des Ladekabels, wird das Ladekabel wieder eingezogen und in dem Bereich zwischen Führungswagen und dem ortsfesten Ende des Ladekabels gespeichert.

Um eine maximale Auszuglänge des Ladekabels bereitzustellen, ist vorgesehen, das erste ortsfeste Ende des Ladekabels und das zweite mobile Ende des Ladekabels auf etwa einer Höhe liegend anzuordnen. Dadurch ergibt sich zwischen dem Führungswagen und dem ortsfesten Ende des Ladekabels ein erster Kabelabschnitt mit einer ersten Länge und zwischen dem Führungswagen und dem mobilen, zweiten Ende des Ladekabels ein zweiter Kabelabschnitt mit einer zweiten Länge. Wird der Führungswagen in Richtung auf das ortsfeste Ende des Ladekabels verfahren, verkürzt sich der erste Kabelabschnitt zwischen dem ortsfesten Ende des Ladekabels und dem Führungswagen sowie der zweite Kabelabschnitt zwischen dem mobilen Ende und dem Führungswagen, wobei sich durch die Verkürzung der beiden Kabelabschnitte eine entsprechend große Auszuglänge für das Ladekabel ergibt.

In einer einfachen Ausführungsform der Erfindung verläuft das Ladekabel zwischen seinem ersten und seinem zweiten Ende in einem Kabelbogen, wobei der Führungswagen im Kabelbogen angeordnet ist. Dieser Kabelbogen kann sich über einen Bogenwinkel von mehr als 30°, vorteilhaft 90° erstrecken. Insbesondere ist ein Kabelbogen mit einem Bogenwinkel von bis zu 180° vorteilhaft. Zweckmäßig ist eine Ausgestaltung mit 180°.

In Weiterbildung der Erfindung ist vorgesehen, dass der Kabelbogen des Ladekabels zusammen mit seinem ortsfesten Ende eine virtuelle Kabelebene aufspannt und der Führungswagen parallel zu dieser virtuellen Kabelebene zu verfahren ist. Die Führungsbahn des Führungswagens liegt zweckmäßig parallel zur Kabelebene.

Für eine störungsfreie Funktion ist es vorteilhaft, dass die Führungsbahn des Führungswagens mit einem Abstand zur virtuellen Kabelebene liegt. Es kann vorgesehen sein, dass das Ladekabel über zumindest einen Kabelabschnitt in Längsrichtung der Führungsbahn des Führungswagens verläuft.

In vorteilhafter Weiterbildung der Erfindung ist die Führungsbahn des Führungswagens durch zumindest eine Führungsstange gebildet. Für eine sichere Führung kann es zweckmäßig sein, den Führungswagen zwischen zwei Führungsstangen zu führen.

In vorteilhafter Weiterbildung der Erfindung ist vorgesehen, den Führungswagen über einen elektrischen Antrieb längs der Führungsbahn zu verfahren. In einfacher Weise kann der elektrische Antrieb über Bedientasten zu steuern sein. In weiterer Ausbildung der Erfindung können die Bedientasten an dem Ladestecker vorgesehen sein. Zweckmäßig sind die Bedientasten im Gehäuse des Ladesteckers integriert.

Um einen störungsfreien Betrieb der Vorrichtung zu gewährleisten ist vorgesehen, das mobile Ende des Ladekabels durch einen Kabelauslass der Vorrichtung zu führen. Um eine der Auszuglänge des Ladekabels aus dem Kabelauslass angepasste Fahrbewegung des Führungswagens zu gewährleisten, ist vorgesehen, im Raumbereich um den Kabelauslass und/oder im Kabelauslass selbst eine Messeinrichtung für das Ladekabel vorzusehen. Der Antrieb zum Verfahren des Führungswagens längs der Führungsbahn weist eine Motorsteuerung auf, mit der die Messeinrichtung verbunden ist. Dabei ist vorgesehen, die Motorsteuerung in Abhängigkeit des Ausgangssignals der Messeinrichtung zu betreiben, so dass der Antrieb der Auszuglänge des Ladekabels angepasst gesteuert ist. Durch diese Schaltungsanordnung wird gewährleistet, dass das Ladekabel in seinen Kabelabschnitten zwischen dem Führungswagen und dem Sockel der Vorrichtung immer straff geführt ist. Kabelschlaufen, Kabelbeulen und dergleichen unerwünschte Lagen des Ladekabels werden so vermieden.

Auch wenn der Benutzer die Bedientaste zum Ausziehen des Ladekabels gedrückt hält und damit der Motorsteuerung einen Fahrbefehl zur Verkürzung der Kabelabschnitte zwischen dem Führungswagen und dem Sockel gibt, wird die Motorsteuerung den Antrieb nur ansteuern, wenn der Benutzer das Ladekabel zügig auszieht. Wird nur die Bedientaste zum Ausziehen des Ladekabels gedrückt, das Ladekabel aber nicht manuell ausgezogen, wird dies von der Messeinrichtung erkannt. Das Ausgangssignal der Messeinrichtung wird von der Motorsteuerung ausgewertet und - auch bei gedrückter Bedientaste - den Antrieb stoppen, um eine Kabelschlaufe, ein Kabelknäuel oder dgl. unerwünschte Kabellagen zu vermeiden.

In zweckmäßiger Ausgestaltung der Erfindung erfasst die Messeinrichtung die Lage des Ladekabels und/oder die Bewegung des Ladekabels. Insbesondere ist es vorteilhaft, wenn die Messeinrichtung die über den Kabelauslass abgezogene Auszugslänge des Ladekabels erfasst und an die Motorsteuerung meldet. Durch Abgleich der gemeldeten Auszuglänge mit der durch die Fahrbewegung des Führungswagens freigegebenen Kabellänge kann die Steuerung des Antriebs erfolgen. Ist die durch die Fahrbewegung des Führungswagens freigegebene Kabellänge größer als die Auszuglänge des Ladekabels, wird der Antrieb gestoppt.

In Weiterbildung der Erfindung ist vorgesehen, die erfindungsgemäße Vorrichtung als Teil einer Ladesäule vorzusehen. Die Anordnung ist vorteilhaft so getroffen, dass sich die Führungsbahn des Führungswagens in Hochrichtung der Ladesäule erstreckt. Vorteilhaft ist die Vorrichtung derart angeordnet, dass das Ladekabel vollständig innerhalb eines Gehäuses der Ladesäule geführt ist. Das ortsfeste Ende des Ladekabels liegt bevorzugt im Fußbereich der Ladesäule. Der Kabelauslass der Vorrichtung liegt vorteilhaft im Fußbereich der Ladesäule, so dass der Kabelabschnitt zwischen dem Führungswagen und dem ortsfesten Ende des Ladekabels und der Kabelabschnitt zwischen dem Führungswagen und dem Kabelauslass innerhalb des Gehäuses der Ladesäule liegen.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Die zu den einzelnen Figuren genannten Merkmale und Vorteile können untereinander kombiniert werden. Es zeigen:
- Fig. 1: eine Frontansicht einer Vorrichtung zur Führung eines Ladekabels,
- Fig. 2: eine Seitenansicht auf die Vorrichtung nach Fig. 1,
- Fig. 3: eine Seitenansicht auf die Vorrichtung nach Fig. 1 in Anordnung an einer Hochseite einer Ladesäule,
- Fig. 4: eine perspektivische Ansicht auf die Vorrichtung nach Fig. 1 von hinten,
- Fig. 5: in vergrößerter Darstellung den Führungswagen der Vorrichtung zur Führung eines Ladekabels nach Fig. 1,
- Fig. 6: in vergrößerter Darstellung den Fußbereich der Vorrichtung zur Führung eines Ladekabels nach Fig. 1,
- Fig. 7: eine schematische Schaltungsanordnung zur Steuerung des Führungswagens in Abhängigkeit von der Auszuglänge des Ladekabels.

Die in den Figuren dargestellte erfindungsgemäße Vorrichtung 1 dient der Führung eines Kabels, eines Schlauches oder dgl. Im gezeigten Ausführungsbeispiel ist die Vorrichtung 1 zur Führung eines Ladekabels 2 vorgesehen. Das Ladekabel 2 hat im Querschnitt zweckmäßig eine runde, insbesondere kreisrunde oder elliptische Form. Andere Querschnitte können vorteilhaft sein, z.B. ein rechteckiger, insbesondere ein flacher Querschnitt.

Die Vorrichtung 1 besteht im Wesentlichen aus einem Sockel 3, einem Führungswagen 4, einer Führungsbahn 5 sowie vorzugsweise einem Antrieb 6 zum Bewegen des Führungswagens 4 längs der Führungsbahn 5.

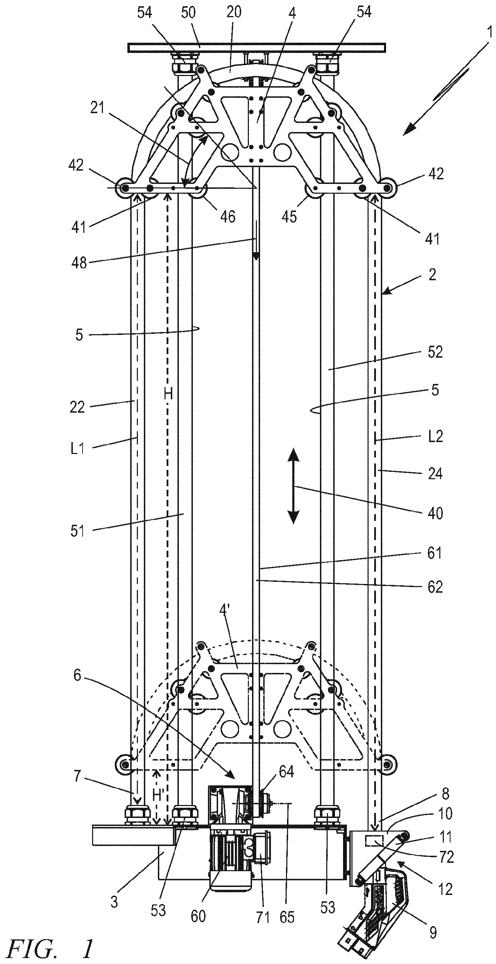

Wie insbesondere Fig. 1 zeigt, ist das im gezeigten Ausführungsbeispiel dargestellte Ladekabel 2 an einem ersten Ende 7 ortsfest angebunden. Im gezeigten Ausführungsbeispiel ist das erste Ende 7 des Ladekabels 2 am Sockel 3 festgelegt. Am ersten Ende 7 ist das Ladekabel 2 mit einer nicht näher dargestellten elektrischen Energiequelle verbunden.

Das Ladekabel 2 hat ein zweites, mobiles Ende 8, an dem ein Ladestecker 9 vorgesehen ist. Über das Ladekabel 2 und den Ladestecker 9 wird elektrische Energie aus der Energiequelle einem Verbraucher zugeführt. Der Verbraucher wird über den Ladestecker 9 elektrisch angeschlossen. Das erste, ortsfeste Ende 7des Ladekabels 2 und das zweite, mobile Ende 8 des Ladekabels 2 liegen in der Vorrichtung 1 vorteilhaft etwa auf einer Höhe. Es kann zweckmäßig sein, eine gleiche Höhe vorzusehen. Die gleiche Höhe des ortsfesten Endes 7 und des mobilen Endes 8 ist auf eine Ausgangslage des Führungswagens 4 bezogen. Diese Ausgangslage kann auch als Startposition der Vorrichtung vor einem Ausziehen des Ladekabels 2 bezeichnet werden.

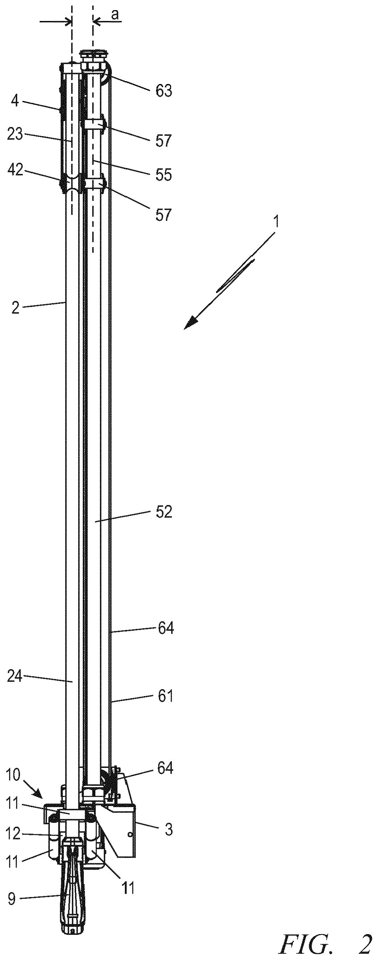

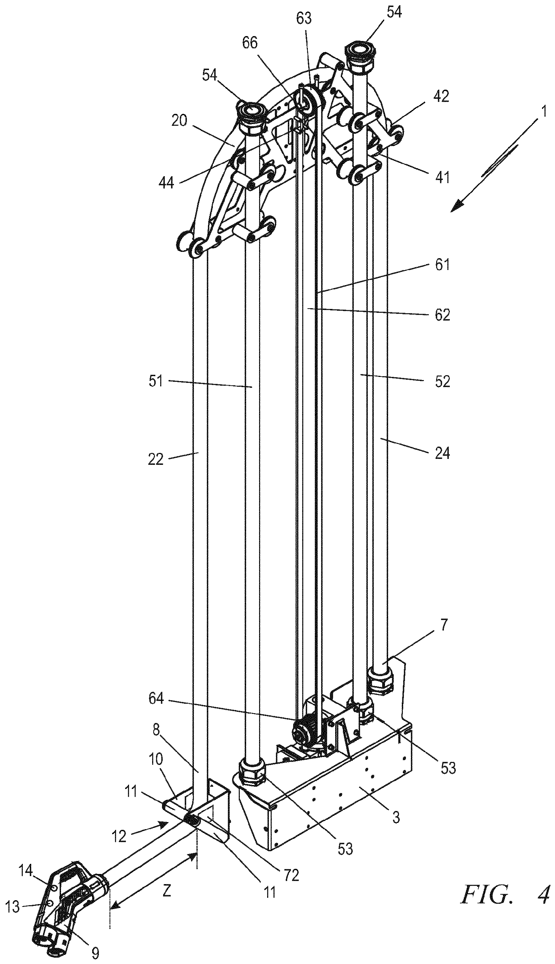

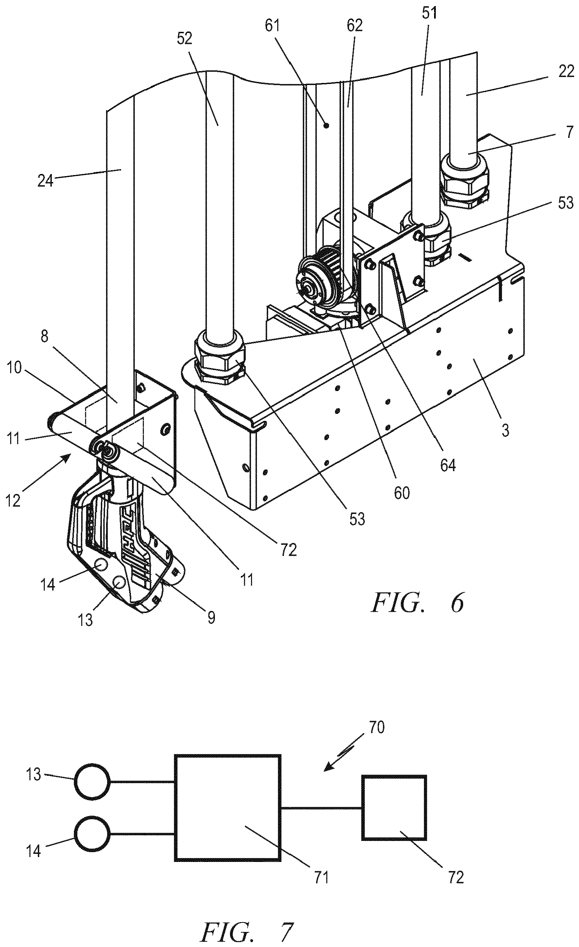

Im gezeigten Ausführungsbeispiel ist das Ladekabel 2 an seinem zweiten Ende 8 durch einen Kabelauslass 10 geführt, welcher zweckmäßig fest an dem Sockel 3 angebunden ist. Der Kabelauslass 10 weist, wie sich insbesondere den Figuren 2 und 6 entnehmen lässt, mehrere Führungsrollen 11 auf, die die Auslassöffnung 12 des Kabelauslasses 10 umgeben. Ein Benutzer kann den Ladestecker 9 greifen und in beliebiger Richtung das Ladekabel 2 aus der Auslassöffnung 12 herausziehen. Dabei wird das Ladekabel 2 durch die Führungsrollen 11 gegen Beschädigungen an Gehäusekanten des Kabelauslasses 10 geschützt. In Fig. 4 ist beispielhaft das mobile, zweite Ende 8 des Ladekabels 2 aus dem Kabelauslass 10 ausgezogen. Das Ladekabel 2 zeigt eine Auszuglänge Z.

Zwischen dem ersten Ende 7 und dem zweiten Ende 8 ist das Ladekabel 2 in einem Längenabschnitt als Kabelbogen 20 geführt. Der Kabelbogen 20 erstreckt sich über einen Bogenwinkel 21 von mehr als 20° bis zu 180°. Zweckmäßig hat der Bogenwinkel eine Größe von 90°. Im gezeigten Ausführungsbeispiel ist der Bogenwinkel 21 vorteilhaft mit 180° ausgeführt.

Das Ladekabel 2 erstreckt sich vom ortsfesten, ersten Ende 7 über einen ersten Kabelabschnitt 22 zum Kabelbogen 20 und über einen zweiten Kabelabschnitt 24 vom Kabelbogen 20 zum zweiten, mobilen Ende 8 mit dem Ladestecker 9. Das ortsfeste Ende 7 des Ladekabels 2 und der Kabelbogen 20 bestimmen eine virtuelle Kabelebene 23 (Fig. 2). Vorteilhaft liegen in dieser virtuellen Kabelebene 23 auch der erste Kabelabschnitt 22 und der zweite Kabelabschnitt 24. Insbesondere kann die Anordnung so vorgesehen sein, dass auch das zweite, mobile Ende 8 in dem Bereich vor dem Kabelauslass 10 in der virtuellen Kabelebene 23 liegt. Die Kabelabschnitte 22 und 24 erstrecken sich zweckmäßig in Längsrichtung der Führungsbahn 5.

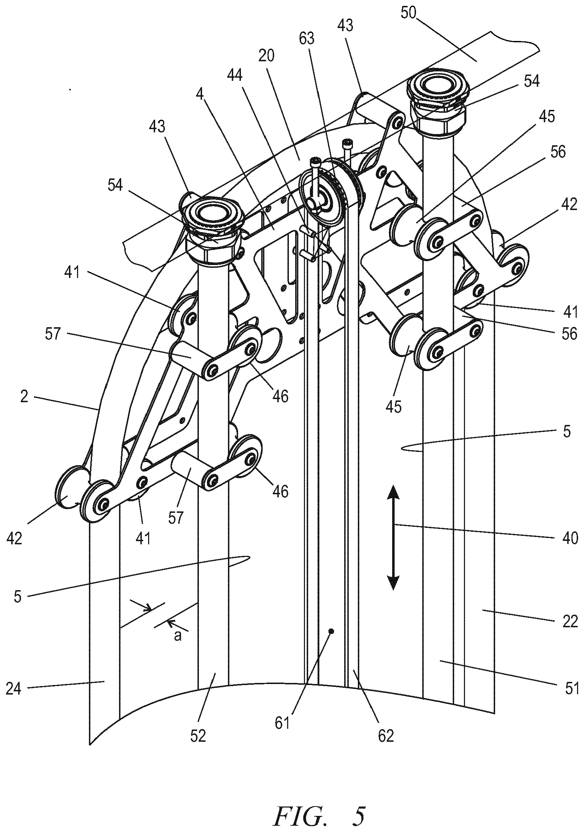

Der Führungswagen 4 ist in Fig. 5 vergrößert dargestellt. Aus dieser Darstellung ist ersichtlich, dass der Führungswagen 4 mehrere Kabelrollen 41, 42 aufweist, die den Längenabschnitt des Ladekabels 2 im Bereich des Kabelbogens 20 führen und halten. Der Führungswagen 4 weist innerhalb des Kabelbogens 20 liegende innere Kabelrollen 41 sowie außerhalb des Kabelbogens 20 liegende äußere Kabelrollen 42 auf. Im Bereich des Eintritts und des Austritts des Kabelbogens 20 ist das Ladekabel 2 zwischen den inneren Kabelrollen 41 und den äußeren Kabelrollen 42 zwangsgeführt. Zweckmäßig wirken die im oberen Bereich des Kabelbogens 20 angeordneten inneren Kabelrollen 41 mit Lagesicherungen 43 zusammen, die ein Abgleiten des Kabelbogens 20 von den inneren Kabelrollen 41 verhindern.

Der Führungswagen 4 weist ferner Führungsrollen 45, 46 auf, die den Führungswagen 4 längs den Führungsbahnen 5 führen. Im gezeigten Ausführungsbeispiel ist eine Führungsbahn 5 durch eine Führungsstange 51, 52 gebildet, die mit einem ersten Ende 53 am Sockel 3 festgelegt ist, wie die Fig. 1 und 6 zeigen. Das andere Ende 54 der Führungsstangen 51, 52 ist an einer Strebe 50 festgelegt, wie die Fig. 1 und 5 zeigen. Die Strebe 50 kann mechanisch fest mit dem Sockel 3 verbunden sein, z. B. über einen Rahmen. Wie die Figuren 2 und 5 zeigen, liegt eine Führungsbahn 5 mit Abstand a zur virtuellen Kabelebene 23. Im gezeigten Ausführungsbeispiel sind zwei Führungsbahnen 5 vorgesehen, die sich parallel zur virtuellen Kabelebene 23 erstrecken. Die Anordnung ist dabei so getroffen, dass in der in Fig. 1 dargestellten Ausgangslage des Führungswagens 4 der erste Kabelabschnitt 22 und der zweite Kabelabschnitt 24 parallel zu einer Führungsbahn 5 verlaufen.

Die die Führungsbahnen 5 bildenden Führungsstangen 51 und 52 spannen eine Führungsebene 55 auf. Die Führungsebene 55 liegt bevorzugt parallel zur virtuellen Kabelebene 23. Die Führungsebene 55 liegt mit dem Abstand a zur virtuellen Kabelebene 23.

Die im Ausführungsbeispiel gezeigten Führungsbahnen 5 liegen einander zugewandt. Erste Führungsrollen 45 des Führungswagens 4 liegen am Außenumfang der einen Führungsstange 51 an. Zweite Führungsrollen 46 des Führungswagens 4 liegen am Außenumfang der zweiten Führungsstange 52 an. Durch diese Anordnung ist ohne weitere Sicherung des Führungswagens 4 dessen Führung in Längsrichtung der Führungsstangen 51, 52 sichergestellt. Zweckmäßig ist ergänzend zu den Führungsrollen 45, 46 eine Führungssicherung in Form eines Sicherungsbolzens 56 bzw. 57 vorgesehen, der parallel zur Drehachse der Führungsrollen 45 bzw. 46 die Führungsstange 51 bzw. 52 hintergreift.

Der Führungswagen 4 ist längs der Führungsbahn 5 in Richtung des Doppelpfeils 40 zu verfahren. In einer in Fig. 1 dargestellten Ausgangslage hat der Führungswagen 4 zum ortsfesten, ersten Ende 7 des Ladekabels 2 einen Abstand H. In der Ausgangslage des Führungswagens 4 entspricht der Abstand H der Länge L1 des ersten Kabelabschnitts 22. Mit dem Verfahren des Führungswagens 4 aus seiner Ausgangslage nach Fig. 1 in Richtung auf den Sockel 3 bis zu einer strichliert dargestellten Endlage 4' wird der Abstand H verringert. Der Führungswagen verfährt dabei in Richtung des Doppelpfeils 40 parallel zur virtuellen Kabelebene 23.

Verfährt der Führungswagen 4 in Fahrtrichtung 48 auf den Sockel 3 zu, ändert sich der Abstand H des Führungswagens 4 zum ortsfesten Ende 7 des Ladekabels 2. In einer vorgegebenen unteren Endlage 4' des Führungswagens 4 hat dieser einen Abstand H' zum ortsfesten Ende 7 des Ladekabels 2. Um die Differenz des Abstandes H - H' verkürzen sich die Kabelabschnitte 22 und 24, so dass das Ladekabel 2 aus dem Kabelauslass 10 um eine Auszuglänge Z (Fig. 4) herausgezogen werden kann. Eine von der Auslassöffnung 12 des Kabelauslasses 10 bis zum Ladestecker 9 gemessene Auszuglänge Z des Ladekabels 2 entspricht der Verkürzung der sich längs der Führungsbahn 5 erstreckenden Kabelabschnitte 22 und 24 aufgrund des Verfahrens des Führungswagens 4 in Fahrtrichtung 48 auf den Sockel 3 zu und der sich daraus ergebenden Differenz des Abstandes H - H'. Vorteilhaft entspricht die Auszuglänge Z der Gleichung 2*(H - H').

Zum Verfahren des Führungswagens 4 kann ein Antrieb 6 vorteilhaft sein, wie er insbesondere den Fig. 1, 4 und 6 zu entnehmen ist. Im gezeigten Ausführungsbeispiel besteht der Antrieb 6 aus einem elektrischen Antriebsmotor 60, der einen Riementrieb 61 antreibt. Der Antriebsriemen 62 des Riementriebs 61 erstreckt sich vorteilhaft längs der Führungsbahn 5 bis zu einer Umlenkrolle 63, die im Bereich der oberen Enden 54 der Führungsstangen 51 und 52 vorgesehen ist. Bevorzugt liegt die Umlenkrolle 63 mittig zwischen den Führungsstangen 51 und 52. Der Antriebsriemen 62 wird von einem Antriebsrad 64 angetrieben, welches im Bereich des Sockels 3 gelagert ist. Der elektrische Antriebsmotor 60 dreht das Antriebsrad 64 um eine Antriebsachse 65, die parallel zur Drehachse 66 der Umlenkrolle 63 liegt. Der Führungswagen 4 weist eine Riemenbefestigung 44 auf, die - vgl. Figuren 4 und 5 - den Antriebsriemen 62 fest mit dem Führungswagen 4 verbindet. Durch Steuern des elektrischen Antriebsmotors 60 kann der Antriebsriemen 62 in Richtung des Doppelpfeils 40 bewegt werden, wobei die Bewegung des Antriebsriemens 62 unmittelbar zum Verfahren des Führungswagens 4 längs der Führungsbahn 5 führt. Vorteilhaft sind der Antriebsriemen 62 als Zahnriemen und die Umlenkrolle 63 sowie das Antriebsrad 64 als Zahnrollen ausgebildet.

Zum Steuern des elektrischen Antriebs kann es vorteilhaft sein, am Ladestecker 9 Bedientasten 13, 14 vorzusehen, wie sie in Fig. 6 schematisch wiedergegeben sind. Die Bedientasten 13 und 14 können drahtgebunden oder drahtlos mit einer Motorsteuerung 71 (Fig. 7) kommunizieren. Es kann vorteilhaft sein, ergänzend einen NOT-AUS Taster vorzusehen.

Wird von einem Benutzer die Bedientaste 13 betätigt, wird der elektrische Antriebsmotor 60 derartig angesteuert, dass der Führungswagen 4 in Fahrtrichtung 48 in Richtung auf den Sockel 3 verfährt. Der das Ladekabel 2 am Ladestecker 9 haltende Benutzer gewinnt Auszuglänge Z, die sich durch die Verkürzung der Kabelabschnitte 22 und 24 ergibt. Die maximal mögliche Auszuglänge Z des Ladekabels 2 aus dem Kabelauslass 10 ergibt sich aus der Summe der Längen L1 und L2 der längs der Führungsbahn 5 verlaufenden Kabelabschnitte 22 und 24.

Zum Einfahren des Ladekabels 2 in die erfindungsgemäße Vorrichtung 1 wird die Bedientaste 14 gedrückt, worauf der elektrische Antriebsmotor 60 seine Drehrichtung ändert und der Antriebsriemen 62 in Gegenrichtung angetrieben wird, so dass der Führungswagen 4 entgegen Fahrtrichtung 48 aus der strichliert dargestellten Endlage 4' zurück in die Ausgangslage nach Fig. 1 verfährt. Gleichzeitig mit dem Verfahren des Führungswagens 4 wird das Ladekabel 2 über den Kabelauslass 10 eingezogen bis der Führungswagen 4 seine in Fig. 1 in durchgezogenen Linien dargestellte obere Ausgangslage wieder erreicht.

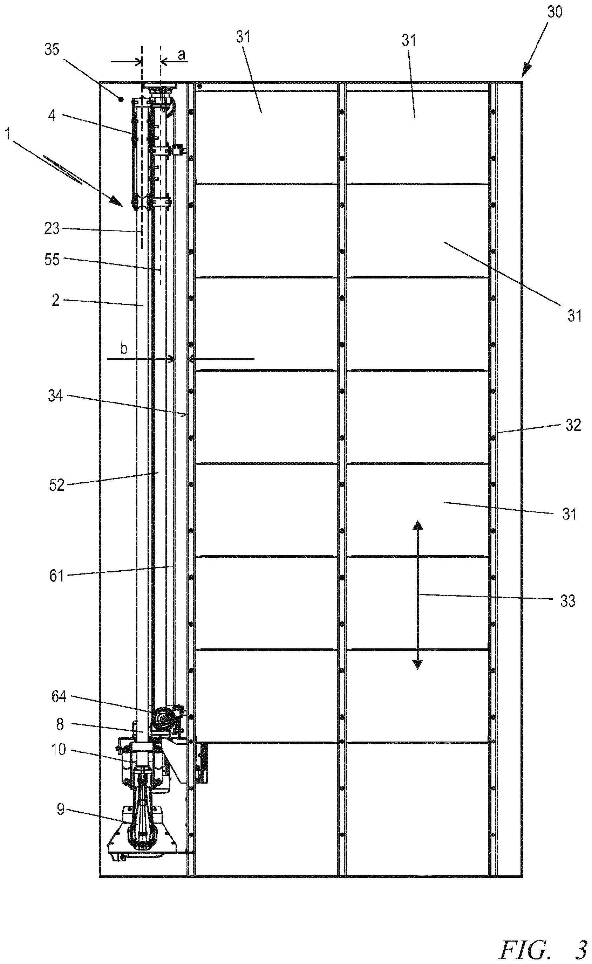

Die erfindungsgemäße Vorrichtung 1 ist insbesondere als Teil einer Ladesäule 30 vorgesehen, wie sie in Fig. 3 dargestellt ist. Die Ladesäule 30 weist ein Aufnahmegerüst 32 mit Aufnahmefächern 31 z. B. für Batterieblöcke auf, die elektrisch miteinander verschaltet sind und eine elektrische Energiequelle zur Verbindung mit dem Ladekabel 2 darstellen. Die Vorrichtung 1 zur Führung des Ladekabels 2 ist derart angeordnet, dass sie sich in Hochrichtung 33 der Ladesäule 30 erstreckt. Die Führungsebene 55 des Führungswagens 4 liegt mit einem Abstand b vor einer Hochseite 34 der Ladesäule 30. Die Führungsebene 55 ebenso wie die virtuelle Kabelebene 23 liegen insbesondere parallel zur Hochseite 34. Die Ladesäule 30 ist bevorzugt in einem geschlossenen Gehäuse 35 vorgesehen, wobei die erfindungsgemäße Vorrichtung 1 zur Führung des Ladekabels 2 innerhalb des Gehäuses 35 liegt.

Um einen störungsfreien Betrieb der Vorrichtung 1 zu gewährleisten, kann es vorteilhaft sein, eine schematische Schaltungsanordnung 70 entsprechend Fig. 7 vorzusehen. Eine derartige Schaltungsanordnung 70 kann in den Grundbauteilen aus einer den Antrieb 6 steuernden Motorsteuerung 71, einer dem Ladekabel 2 zugeordneten Messeinrichtung 72 und aus einer oder mehreren Bedientasten 13, 14 bestehen. Wie in Fig. 4 gezeigt, kann das Ladekabel 2 an dem zweiten, dem mobilen Ende 8 durch den Kabelauslass 10 der Vorrichtung 1 ausgezogen werden. Um eine der Auszuglänge Z des Ladekabels 2 aus dem Kabelauslass 10 angepasste Fahrbewegung des Führungswagens 4 zu gewährleisten, ist vorgesehen, im Raumbereich um den Kabelauslass 10 und/oder im Kabelauslass 10 selbst eine Messeinrichtung 72 für das Ladekabel 2 vorzusehen. Die Messeinrichtung 72 kann kontaktlos oder das Ladekabel kontaktierend ausgebildet sein. Insbesondere kann die Messeinrichtung 72 derart ausgebildet sein, dass die Lage des Ladekabels 2 im Bereich und/oder im Kabelauslass 10 erfasst wird. Zweckmäßig kann durch die Messeinrichtung 72 auch die Bewegung des Ladekabels 2 erfasst werden. Insbesondere ist es vorteilhaft, wenn die Messeinrichtung 72 die über den Kabelauslass 10 abgezogene Auszuglänge Z des Ladekabels 2 erfasst und an die Motorsteuerung 71 meldet. Die Schaltungsanordnung 70 ist derart ausgebildet, dass die Motorsteuerung 71 in Abhängigkeit des Ausgangssignals der Messeinrichtung 72 gesteuert werden kann, um so den elektrischen Antrieb 6 der Auszuglänge Z des Ladekabels 2 angepasst zu steuern. Dabei ist gewährleistet, durch die Schaltungsanordnung 70 das Ladekabel 2 in seinen Kabelabschnitten 22, 24 zwischen dem Führungswagen 4 und dem Sockel 3 der Vorrichtung 1 immer straff zu führen. Kabelschlaufen, Kabelbeulen und dergleichen unerwünschte Lagen des Ladekabels 2 werden so vermieden.

Auch wenn der Benutzer die Bedientaste 13 zum Ausziehen des Ladekabels 2 aus der Vorrichtung 1 gedrückt hält und damit über die Motorsteuerung 71 dem Führungswagen 4 einen Fahrbefehl zur Verkürzung der Kabelabschnitte 22 und 23 gibt, wird die Motorsteuerung 71 den Antrieb 6 nur entsprechend ansteuern, wenn der Benutzer das Ladekabel 2 zügig auszieht. Wird vom Benutzer nur die Bedientaste 13 zum Ausziehen des Ladekabels 2 gedrückt, das Ladekabel 2 aber nicht ausreichend ausgezogen, wird dies von der Messeinrichtung 72 erkannt. Das Ausgangssignal der Messeinrichtung 72 wird von der Motorsteuerung 71 ausgewertet und wird - auch bei gedrückter Bedientaste 13 - den Antrieb 6 stoppen, um eine Kabelschlaufe, ein Kabelknäuel oder dgl. unerwünschte Kabellagen zu vermeiden.

Durch Abgleich der von der Messeinrichtung 72 gemeldeten Auszuglänge Z mit der durch die Fahrbewegung des Führungswagens 4 freigegebenen Kabellänge kann die Steuerung des Antriebs 6 erfolgen. Ist die durch die Fahrbewegung des Führungswagens 4 freigegebene Kabellänge größer als die Auszuglänge Z des Ladekabels 2, wird der Antrieb 6 gestoppt.

Es kann vorteilhaft sein, im Kabelauslass 10 eine Zwangsführung für das Ladekabel 2 vorzusehen. So kann das Ladekabel 2 zwischen zwei, das Ladekabel 2 kontaktierenden Messrollen geführt sein, die auf dem Außenumfang des Ladekabels 2 reibschlüssig aufliegen. Jede Bewegung des Ladekabels 2 in seiner Längsrichtung führt zu einer Abrollbewegung der Messrollen, deren Drehung über die Messeinrichtung 72 erfasst und als Ausgangssignal der Motorsteuerung 72 zur Auswertung übermittelt wird.

Es kann auch vorteilhaft sein, die Zwangsführung für das Ladekabel 2 durch eine, insbesondere zwei Antriebsrollen auszubilden, zwischen denen das Ladekabel 2 geführt ist. Zumindest eine auf dem Außenumfang des Ladekabels 2 kraftübertragend aufliegende Antriebsrolle kann mit einem motorischen Antrieb verbunden sein, der das Ladekabel 2 in seiner Längsrichtung 2 bewegt. Über eine Auszugsteuerung kann die Antriebsrolle und damit die Bewegung des Ladekabels 2 in dessen Längsrichtung gezielt gesteuert werden, so dass eine angepasste Steuerung der Fahrbewegung des Führungswagens 4 durch den Antrieb 6 in Abhängigkeit der durch zumindest eine Antriebsrolle ausgeführten Zwangsbewegung des Ladekabels 2 in dessen Längsrichtung erfolgen kann.

## Patentansprüche

1. Vorrichtung zur Führung eines Ladekabels (2), insbesondere eines Ladekabels (2) an einer Ladesäule (30) für einen elektrischen Verbraucher wie einem Kraftfahrzeug, wobei das Ladekabel (2) an einem ersten Ende (7) ortsfest angebunden ist und an einem zweiten, mobilen Ende (8) einen Ladestecker (9) aufweist,
**dadurch gekennzeichnet, dass** zwischen dem ersten Ende (7) und dem zweiten Ende (8) des Ladekabels (2) ein Führungswagen (4) angeordnet ist, dass das Ladekabel (2) in seiner Längsrichtung an dem Führungswagen (4) geführt und gehalten ist, wobei der Führungswagen (4) längs einer Führungsbahn (5) derart zu verfahren ist, dass sich der Abstand (a) des Führungswagens (4) zum ortsfesten Ende (7) des Ladekabels (2) ändert.

2. Vorrichtung nach Anspruch 1,
**dadurch gekennzeichnet, dass** das erste, ortsfeste Ende (7) des Ladekabels (2) und das zweite, mobile Ende (8) des Ladekabels (2) auf einer Höhe liegen.

3. Vorrichtung nach Anspruch 1,
**dadurch gekennzeichnet, dass** das Ladekabel (2) in einem Kabelabschnitt zwischen seinem ersten Ende (7) und seinem zweiten Ende (8) in einem Kabelbogen (20) verläuft und der Führungswagen (4) in dem Kabelbogen (20) angeordnet ist.

4. Vorrichtung nach Anspruch 3,
**dadurch gekennzeichnet, dass** sich der Kabelbogen (20) über einen Bogenwinkel (21) von mehr als 30°, vorteilhaft 90°, insbesondere bis zu 180° erstreckt.

5. Vorrichtung nach Anspruch 3,
**dadurch gekennzeichnet, dass** der Kabelbogen (20) des Ladekabels (2) zusammen mit seinem ortsfesten Ende (7) eine virtuelle Kabelebene (23) aufspannt, und der Führungswagen (4) parallel zur virtuellen Kabelebene (23) zu verfahren ist.

6. Vorrichtung nach Anspruch 5,
**dadurch gekennzeichnet, dass** sich die Führungsbahn (5) des Führungswagens (4) parallel zur Kabelebene (23) erstreckt.

7. Vorrichtung nach Anspruch 5,
**dadurch gekennzeichnet, dass** die Führungsbahn (5) des Führungswagens (4) mit einem Abstand (a) zur virtuellen Kabelebene (23) liegt.

8. Vorrichtung nach Anspruch 1,
**dadurch gekennzeichnet, dass** das Ladekabel (2) über zumindest einen Kabelabschnitt (22, 24) in Längsrichtung der Führungsbahn (5) des Führungswagens (4) verläuft.

9. Vorrichtung nach Anspruch 1,
**dadurch gekennzeichnet, dass** die Führungsbahn (5) des Führungswagens (4) zumindest eine Führungsstange (51, 52) aufweist.

10. Vorrichtung nach Anspruch 9,
**dadurch gekennzeichnet, dass** der Führungswagen (4) zwischen zwei Führungsstangen (51, 52) geführt ist.

11. Vorrichtung nach Anspruch 1,
**dadurch gekennzeichnet, dass** der Führungswagen (4) über einen elektrischen Antrieb (6) längs der Führungsbahn (5) zu verfahren ist.

12. Vorrichtung nach Anspruch 11,
**dadurch gekennzeichnet, dass** der elektrische Antrieb (6) über Bedientasten (13, 14) zu steuern ist, wobei die Bedientasten (13, 14) an dem Ladestecker (9) vorgesehen sind.

13. Vorrichtung nach Anspruch 12,
**dadurch gekennzeichnet, dass** die Bedientasten (13, 14) im Gehäuse des Ladesteckers (9) integriert sind.

14. Vorrichtung nach Anspruch 11,
**dadurch gekennzeichnet, dass** das mobile Ende (8) des Ladekabels (2) durch einen Kabelauslass (10) geführt ist, dass im Raumbereich des Kabelauslasses (10) eine Messeinrichtung (72) für das Ladekabel (2) angeordnet ist, dass der Antrieb (6) zum Verfahren des Führungswagens (4) eine Motorsteuerung (71) aufweist und die Messeinrichtung (72) mit der Motorsteuerung (71) verbunden ist, wobei die Motorsteuerung (71) in Abhängigkeit des Ausgangssignals der Messeinrichtung (72) den Antrieb (6) steuert.

15. Vorrichtung nach Anspruch 11,
**dadurch gekennzeichnet, dass** die Messeinrichtung (72) die Lage des Ladekabels (2) und/oder die Bewegung des Ladekabels (2) erfasst.

16. Vorrichtung nach Anspruch 11,
**dadurch gekennzeichnet, dass** die Messeinrichtung (72) die über den Kabelauslass (10) abgezogene Auszugslänge (Z) des Ladekabels (2) erfasst.

17. Vorrichtung nach Anspruch 1,
**dadurch gekennzeichnet, dass** die Vorrichtung (1) Teil einer Ladesäule (30) ist und sich die Führungsbahn (5) des Führungswagens (4) in Hochrichtung (33) der Ladesäule (30) erstreckt.

18. Vorrichtung nach Anspruch 17,
**dadurch gekennzeichnet, dass** das Ladekabel (2) innerhalb eines Gehäuses (35) der Ladesäule (30) geführt ist.
